# EUROPÄISCHE PATENTSCHRIFT

(11) **EP 2 337 803 B1**
(45) Veröffentlichungstag und Bekanntmachung des Hinweises auf die Patenterteilung: **25.09.2013**
(21) Anmeldenummer: 09782661.4
(22) Anmeldetag: 07.09.2009
(51) Int. Cl.: C08F 220/18, C08F 2/01, C08F 2/24, B01J 19/00, B01J 10/00, C08F 220/56

(54) **VERFAHREN ZUR HERSTELLUNG VON POLYMERPARTIKELN DURCH EMULSIONSPOLYMERISATION**
METHOD FOR PRODUCING POLYMER PARTICLES BY EMULSION POLYMERIZATION
PROCÉDÉ DE PRÉPARATION DE PARTICULES DE POLYMÈRE PAR POLYMÉRISATION EN ÉMULSION

(30) Priorität: 16.09.2008 EP 08164435
(43) Veröffentlichungstag der Anmeldung: 29.06.2011
(73) Patentinhaber: BASF SE, 67056 Ludwigshafen (DE)
(72) Erfinder: LABISCH, Oliver, 68199 Mannheim (DE); ABBOUD, Mohammed, 64285 Darmstadt (DE); BIEDASEK, Silke, 68165 Mannheim (DE); SACK, Heinrich, 67454 Haßloch (DE); NAUNDORF, Corinna, 76337 Waldbronn (DE); REIMER, Dieter, 67112 Mutterstadt (DE); URIBE AROCHA, Paola, 68163 Mannheim (DE); SEIDL, Volker, 68199 Mannheim (DE); MORITZ, Hans-Ulrich, 21227 Bendestorf (DE); PAUER, Werner, 22926 Ahrensburg (DE)
(86) Internationale Anmeldenummer: PCT/EP2009/061515
(87) Internationale Veröffentlichungsnummer: WO 2010/031705

(56) Entgegenhaltungen:
- WO-A-2006/024369
- DE-A1-102004 042 946
- US-A1- 2002 193 546

## Beschreibung

Die vorliegende Erfindung betrifft ein Verfahren zur Herstellung von Polymerpartikeln durch Emulsionspolymerisation eines ethylenisch ungesättigten Monomers, wobei diskrete Tropfen einer wässrigen Monomeremulsion in eine umgebende Gasphase dosiert werden und das ethylenisch ungesättigte Monomer in den diskreten Tropfen dispergiert ist.

EP 0 467 103 A2 und DE 39 23 229 A1 offenbaren Verfahren zur Herstellung redispergierbarer Polymerpartikel durch Sprühtrocknung von Polymerdispersionen.

In WO 96/40427 A1 wird ein Verfahren zur Herstellung wasserabsorbierender Polymerpartikel durch Sprühpolymerisation offenbart. Die wasserabsorbierenden Polymerpartikel sind geeignet zur Herstellung von Kabelummantelungen und werden beispielsweise durch Polymerisation wässriger Lösungen einer teilneutralisierten Acrylsäure erhalten.

WO 2006/024369 A1 und WO 2006/024370 A1 beschreiben weitere Verfahren zur Sprühpolymerisation. Die gemäß den Verfahren hergestellten Polymerpartikel können als Verdicker für wässrige Flüssigkeiten verwendet werden.

Gemäß WO 2006/024369 A1 werden wässrige Lösungen eines wasserlöslichen ethylenisch ungesättigten Monomers eingesetzt, wobei geeignete Zusatzstoffe bewirken, dass die erhaltenen Polymere im wässrigen Lösemittel dispergiert werden.

Gemäß WO 2006/024370 A1 werden in einem organischen Lösemittel dispergierte Tropfen eines wasserlöslichen ethylenisch ungesättigten Monomers eingesetzt.

Macromol. Rapid Commun. 22 (2001) 896 beschreibt ein Verfahren zur Herstellung von Polymerdispersionen durch radikalische Polymerisation von ethylenisch ungesättigten Monomeren, welche, gegebenenfalls gemeinsam mit einem hydrophoben Lösemittel, in einem wässrigen Medium als disperse Phase mit einer mittleren Tröpfchengröße von weniger als 1.000 nm vorliegen (Miniemulsion).

Aufgabe der vorliegenden Erfindung war die Bereitstellung eines verbesserten Verfahrens zur Herstellung von Polymerpartikeln durch wässrige Emulsionspolymerisation.

Insbesondere war es eine Aufgabe der vorliegenden Erfindung ein einfaches Verfahren zur Herstellung leicht redispergierbarer Polymerpartikel bereitzustellen.

Gelöst wurde die Aufgabe durch ein Verfahren zur Herstellung von Polymerpartikeln durch Polymerisation einer Emulsion, enthaltend mindestens ein ethylenisch ungesättigtes Monomer, mindestens ein Dispergierhilfsmittel, mindestens einen Polymerisationsinitiator und Wasser, wobei das ethylenisch ungesättigte Monomer in Wasser dispergiert ist, dadurch gekennzeichnet, dass die Emulsion unter Ausbildung diskreter Tropfen in einen Reaktionsraum dosiert wird und der Reaktionsraum mit einer erwärmten Gasphase gefüllt ist.

Vorteilhaft wird das mindestens eine ethylenisch ungesättigte Monomer, bezogen auf Wasser, in einer Menge eingesetzt, die größer ist als seine Wasserlöslichkeit.

Bevorzugte ethylenisch ungesättigte Monomere sind Styrol, Acrylnitril, Butadien, Ethylen, Vinylchlorid, Vinylidenchlorid, Vinylester, Vinylether, Acrylsäureester und Methacrylsäureester.

Die Einsatzmenge an Dispergierhilfsmittel, bezogen auf die Gesamtmenge an ethylenisch ungesättigten Monomer beträgt vorzugsweise 0,005 bis 20 Gew.-%, besonders bevorzugt 0,01 bis 15 Gew.-%, ganz besonders bevorzugt 0,1 bis 10 Gew.-%, wobei vorteilhaft Emulgatoren als Dispergierhilfsmittel Verwendung finden.

Im erfindungsgemäßen Verfahren werden bevorzugt radikalische Polymerisationinitiatoren eingesetzt.

Die erzeugten diskreten Tropfen der Emulsion weisen einen mittlere Durchmesser von vorzugsweise 1 bis 1.000 µm, bevorzugt 10 bis 500 µm, ganz besonders bevorzugt 100 bis 200 µm, auf. Der mittlere Durchmesser ist der volumengemittelte Durchmesser und kann durch Lichtstreuung ermittelt werden.

Vorteilhaft enthält die Emulsion, bezogen auf die Gesamtmenge an ethylenisch ungesättigtem Monomer, 0,1 bis 15 Gew.-%, besonders bevorzugt 0,2 bis 10 Gew.-%, ganz besonders bevorzugt 0,5 bis 7 Gew.-% eines Schutzkolloids auf. Durch das Schutzkolloid wird vermieden, dass die erzeugen Polymerpartikel bei der im Reaktionsraum zeitgleich ablaufenden Trocknung verkleben, insbesondere bei Trocknungstemperaturen, die oberhalb der Glasübergangstemperatur der erzeugten Polymere liegen.

Geeignete Schutzkolloide sind Polyvinylalkohole, Polyvinylacetale, Polyvinylpyrrolidone, Polysaccharide in wasserlöslicher Form, wie Stärke, Amylose, Amylopektin, Cellulose und deren Carboxymethyl-, Methyl-, Hydroxyethyl-, Hydroxypropylderivate, Proteine, wie Casein oder Caseinat, Sojaprotein, Gelatine, Ligninsulfonate, synthetische Polymere, wie Poly-(meth)acrylsäure, Copolymerisate von (Meth)acrylaten mit carboxylfunktionellen Comonomereinheiten, Poly(meth)acrylamid, Polyvinylsulfonsäuren und deren wasserlösliche Copolymere, Formaldehydkondensationsprodukte mit einkernigen und mehrkernigen, substituierten und unsubstituierten, sulfonierten aromatischen Verbindungen, wie Melaminformaldehydsulfonate, Naphthalinformaldehydsulfonate und Phenolformaldehydsulfonate, Styrolmaleinsäure- und Vinylethermaleinsäure-Copolymere.

Bevorzugte Schutzkolloide sind Formaldehydkondensationsprodukte mit einkernigen und mehrkernigen, substituierten und unsubstituierten, sulfonierten aromatischen Verbindungen, wie Melaminformaldehydsulfonate, Naphthalinformaldehydsulfonate und Phenolformaldehydsulfonate, Polyvinylalkohole, Polyvinylpyrrolidone, Polyvinylamine, Polyvinylformamide und Polyalkylenoxide.

Die Polymerisation wird zweistufig durch geführt und die Emulsion erst bei einem Umsatz an ethylenisch ungesättigtem Monomer von 1 bis 98%, besonders bevorzugt von 10 bis 75%, ganz besonders bevorzugt von 20 bis 50% unter Ausbildung diskreter Tropfen in den Reaktionsraum dosiert.

Die erste Stufe der Polymerisation kann in beliebigen Reaktoren durchgeführt werden. Geeignete Reaktoren sind beispielsweise Rührkessel, Rührkesselkaskaden oder aber auch Rohrreaktoren.

In einer besonderen Ausführungsform der vorliegenden Erfindung ist die Emulsion eine Miniemulsion. Die in einer Miniemulsion dispergierten Tropfen weisen einen Durchmesser von weniger als 1.000 nm auf. Eine Miniemulsion entsteht durch Einsatz hoher Scherkräfte.

Die Miniemulsionen können durch Zusatz von vorzugsweise 0,01 bis 20 Gew.-%, besonders bevorzugt von 0,5 bis 10 Gew.-%, ganz besonders bevorzugt von 1 bis 5 Gew.-%, einer hydrophoben organischen Verbindung, jeweils bezogen auf die Gesamtmenge an ethylenisch ungesättigtem Monomer, stabilisiert werden.

Bevorzugte hydrophobe organische Verbindungen sind aliphatische Kohlenwasserstoffe, Fettalkohole, Fettalkoholacrylate und Fettalkoholmethacrylate.

In einer weiteren besonderen Ausführungsform der vorliegenden Erfindung ist die Emulsion eine Mikroemulsion. Eine Mikroemulsion kann durch Zusatz einer ausreichenden Menge eines Emulgators, beispielsweise kationischer, anionischer und/oder nichtionischer Tenside, erzeugt werden. Die Menge an Emulgator beträgt vorzugsweise 1 bis 50 Gew.-%, besonders bevorzugt 2 bis 30 Gew.-%, ganz besonders bevorzugt 5 bis 20 Gew.-%, jeweils bezogen auf die Menge an Mikroemulsion.

Im Folgenden wird die vorliegende Erfindung näher erläutert.

Als ethylenisch ungesättigte Monomere (Monomere E) kommen prinzipiell alle radikalisch polymerisierbaren ethylenisch ungesättigten Verbindungen in Betracht. Als Monomere E kommen insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisende Monocarbonsäuren, wie Vinylacetat, Vinylpropionat, Vinyl-n-butyrat, Vinyllaurat und Vinylstearat, Vinylether aus im allgemeinen 1 bis 12, vorzugsweise 1 bis 8 und insbesondere 1 bis 4 C-Atome aufweisenden Alkanolen, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl und -2-ethylhexylester, Maleinsäuredimethylester oder Maleinsäure-di-n-butylester, Nitrile α,β-monoethylenisch ungesättigter Carbonsäuren, wie Acrylnitril sowie 4 bis 8 C-Atome aufweisende konjugierte Diene, wie 1,3-Butadien und Isopren. Selbstverständlich können auch Gemische vorgenannter Monomere E eingesetzt werden. Die genannten Monomere E bilden in der Regel die Hauptmonomeren, die, bezogen auf die Gesamtmenge der nach dem erfindungsgemäßen Verfahren zu polymerisierenden Monomeren E normalerweise einen Anteil von mindestens 50 Gew.-%, bevorzugt mindestens 80 Gew.-% oder vorteilhaft mindestens 90 Gew.-% auf sich vereinen

Weitere Monomere E, die üblicherweise die innere Festigkeit des durch Polymerisation der ethylenisch ungesättigten Monomere E erhältlichen Polymerisats erhöhen, weisen normalerweise wenigstens eine Epoxy-, Hydroxyl-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylendioldiacrylate und -dimethacrylate, wie Ethylenglykoldiacrylat, 1,2-Propylenglykoldiacrylat, 1,3-Propandioldiacrylat, 1,3-Butandioldiacrylat, 1,4-Butandioldiacrylate und Ethylenglykoldimethacrylat, 1,2-Propylenglykoldimethacrylat, 1,3-Propandioldimethacrylat, 1,3-Butandioldimethacrylat, 1,4-Butandioldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester, wie 2-Hydroxyethyl-, 3-Hydroxypropyl- oder 4-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomere, bezogen auf die Gesamtmenge der ethylenisch ungesättigten Monomeren E, in Mengen von bis zu 5 Gew.-%, häufig 0,1 bis 3 Gew.-% und oft 0,5 bis 2 Gew.-% eingesetzt.

Als Monomere E sind auch Siloxangruppen enthaltende ethylenisch ungesättigte Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Gesamtmengen von bis zu 5 Gew.-%, häufig von 0,01 bis 3 Gew.-% und oft von 0,05 bis 1 Gew.-%, jeweils bezogen auf die Gesamtmenge der Monomeren E, verwendet.

Daneben können als Monomere E zusätzlich solche ethylenisch ungesättigten Monomere, die entweder wenigstens eine Säuregruppe und/oder deren entsprechendes Anion (Monomere ES) oder solche ethylenisch ungesättigten Monomere, die wenigstens eine Amino-, Amido-, Ureido- oder N-heterocyclische Gruppe und/oder deren am Stickstoff protonierten oder alkylierten Ammoniumderivate (Monomere EA) enthalten, eingesetzt werden. Bezogen auf die Gesamtmenge der zu polymerisierenden Monomere E, beträgt die Menge an Monomeren ES bzw. Monomeren EA bis zu 10 Gew.-%, oft 0,1 bis 7 Gew.-% und häufig 0,2 bis 5 Gew.-%.

Als Monomere ES werden ethylenisch ungesättigte Monomere eingesetzt, welche wenigstens eine Säuregruppe aufweisen. Dabei kann die Säuregruppe beispielsweise eine Carbonsäure-, Sulfonsäure-, Schwefelsäure-, Phosphorsäure- und/oder Phosphonsäuregruppe sein. Beispiele für solche Monomere ES sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat, Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wenigstens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere ES eingesetzt.

Als Monomere EA werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere EA, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl^{®} TBAEMA der Elf Atochem), 2-(N,N-Dimethylamino)ethylacrylat (beispielsweise kommerziell verfügbar als Norsocryl^{®} A-DAME der Fa. Elf Atochem), 2-(N,N-Dimethylamino)ethylmethacrylat (beispielsweise kommerziell verfügbar als Norsocryl^{®} MADAME der Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere EA, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere EA, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl^{®} 100 der Elf Atochem).

Beispiele für Monomere EA, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere EA folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Abhängig vom pH-Wert des wässrigen Reaktionsmediums kann ein Teil oder die Gesamtmenge der vorgenannten stickstoffhaltigen Monomere EA in der am Stickstoff protonierten quartären Ammoniumform vorliegen.

Als Monomere EA, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl^{®} ADAMQUAT MC 80 der Elf Atochem), 2-(N,N,N-Trimethylammonium)ethylmethacrylatchlorid (beispielsweise kommerziell verfügbar als Norsocryl^{®} MADQUAT MC 75 der Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Nor-socryl^{®} ADAMQUAT BZ 80 der Elf Atochem), 2-(N-Benzyl-N,N-dimethylammonium)ethylmethacrylatchlorid (beispielsweise kommerziell verfügbar als Norsocryl^{®} MADQUAT BZ 75 der Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-(N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium)propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethylmethacrylatchlorid verwendet.

Selbstverständlich können auch Gemische der vorgenannten ethylenisch ungesättigten Monomeren ES bzw. EA eingesetzt werden.

Erfindungsgemäß vorteilhaft wird als ethylenisch ungesättigtes Monomer E eine Monomerenmischung eingesetzt, welche zu

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure, Vinylester langkettiger Fettsäuren und/oder Ethylen |

enthält.

Die nach dem erfindungsgemäßen Verfahren eingesetzten Dispergierhilfsmittel können prinzipiell Emulgatoren und/oder Schutzkolloide sein.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, aminogruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Erfindungsgemäß werden als Dispergierhilfsmittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: C₄ bis C₁₂) sowie ethoxylierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxylate, EO-Grad: 3 bis 8), Lutensol^{®} AO-Marken (C₁₃C₁₅-Oxoalkoholethoxylate, EO-Grad: 3 bis 30), Lutensol^{®} AT-Marken (C₁₆C₁₈-Fettalkoholethoxylate, EO-Grad: 11 bis 80), Lutensol^{®} ON-Marken (C₁₀-Oxoalkoholethoxylate, EO-Grad: 3 bis 11) und die Lutensol^{®} TO-Marken (C₁₃-Oxoalkoholethoxylate, EO-Grad: 3 bis 20) der BASF SE.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel (I) 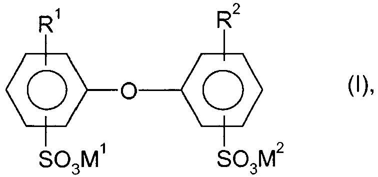 worin R¹ und R² H-Atome oder C₄- bis C₂₄-Alkyl bedeuten und nicht gleichzeitig H-Atome sind, und M¹ und M² Alkalimetallionen und/oder Ammoniumionen sein können, erwiesen. In der allgemeinen Formel (I) bedeuten R¹ und R² bevorzugt lineare oder verzweigte Alkylreste mit 6 bis 18 C-Atomen, insbesondere mit 6, 12 und 16 C-Atomen oder Wasserstoff, wobei R¹ und R² nicht beide gleichzeitig H-Atome sind. M¹ und M² sind bevorzugt Natrium, Kalium oder Ammonium, wobei Natrium besonders bevorzugt ist. Besonders vorteilhaft sind Verbindungen (I), in denen M¹ und M² Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 der Dow Chemical Company. Die Verbindungen (I) sind allgemein bekannt, z.B. aus US 4,269,749, und im Handel erhältlich.

Geeignete kationenaktive Emulgatoren sind in der Regel einen C₆- bis C₁₈-Alkyl-,-Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol^{®} AC der BASF SE, ca. 12 Ethylenoxideinheiten). Zahlreiche weitere Beispiele finden sich in H. Stache, Tensid-Taschenbuch, Carl-Hanser-Verlag, München, Wien, 1981 und in Mc-Cutcheon's, Emulsifiers & Detergents, MC Publishing Company, Glen Rock, 1989. Günstig ist, wenn die anionischen Gegengruppen möglichst gering nukleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat.

Die als Dispergierhilfsmittel bevorzugt eingesetzten Emulgatoren werden vorteilhaft in einer Gesamtmenge von 0,005 bis 20 Gew.-%, vorzugsweise 0,01 bis 15 Gew.-%, insbesondere 0,1 bis 10 Gew.-%, jeweils bezogen auf die Gesamtmenge an Monomer E, eingesetzt.

Die Gesamtmenge der als Dispergierhilfsmittel zusätzlich oder statt der Emulgatoren eingesetzten Schutzkolloide beträgt oft 0,1 bis 10 Gew.-% und häufig 0,2 bis 7 Gew.-%, jeweils bezogen die Gesamtmenge an Monomer E.

Bevorzugt werden jedoch anionische und/oder nichtionische Emulgatoren als Dispergierhilfsmittel eingesetzt.

Kennzeichnend für das erfindungsgemäße Verfahren ist, dass zur Auslösung der radikalisch induzierten Polymerisation sowohl sogenannte wasserlösliche wie auch sogenannte öllösliche Radikalinitiatoren eingesetzt werden können. Dabei werden als wasserlösliche Radikalinitiatoren in der Regel alle diejenigen Radikalinitiatoren verstanden, welche üblicherweise bei der radikalisch initiierten wässrigen Emulsionspolymerisation eingesetzt werden, während als öllösliche Radikalinitiatoren alle diejenigen Radikalinitiatoren verstanden werden, welche der Fachmann üblicherweise bei der radikalisch initiierten Lösungspolymerisation einsetzt. Im Rahmen dieser Schrift sollen als wasserlösliche Radikalinitiatoren alle diejenigen Radikalinitiatoren verstanden werden, die bei 20 °C und 1 bar (absolut) in entionisiertem Wasser eine Löslichkeit größer 1 Gew.-% aufweisen, während unter öllöslichen Radikalinitiatoren alle diejenigen Radikalinitiatoren verstanden werden, die unter vorgenannten Bedingungen eine Löslichkeit weniger 1 Gew.-% aufweisen. Häufig weisen wasserlösliche Radikalinitiatoren unter vorgenannten Bedingungen eine Wasserlöslichkeit größer 2 Gew.-%, größer 5 Gew.-%, oder größer 10 Gew.-%, während öllösliche Radikalinitiatoren häufig eine Wasserlöslichkeit weniger 0,9 Gew.-%, weniger 0,8 Gew.-%, weniger 0,7 Gew.-%, weniger 0,6 Gew.-%, weniger 0,5 Gew.-%, weniger 0,4 Gew.-%, weniger 0,3 Gew.-%, weniger 0,2 Gew.-% oder weniger 0,1 Gew.-% aufweisen.

Bei den wasserlöslichen Radikalinitiatoren kann sich dabei beispielsweise sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetalloder Ammoniumsalze der Peroxodischwefelsäure, wie beispielsweise deren Monound Di-Natrium-, -Kalium- oder Ammoniumsalze oder organische Peroxide, wie Alkylhydroperoxide, beispielsweise tert.-Butyl-, p-Mentyl- oder Cumylhydroperoxid eingesetzt werden. Als Azoverbindung finden im wesentlichen 2,2'-Azobis(isobutyronitril), 2,2'-Azobis(2,4-dimethylvaleronitril), 2,2'-Azobis(amidinopropyl)dihydrochlorid (AIBA, entspricht V-50 von Wako Chemicals) und 2,2'-Azobis[2-(2-imidazolin-2-yl)propan)dihydrochlorid (entspricht VA-044 von Wako Chemicals) Verwendung. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugt werden als wasserlösliche Radikalinitiatoren ein Mono- oder Di-Alkalimetalloder Ammoniumsalz der Peroxodischwefelsäure, beispielsweise Dikaliumperoxidisulfat, Dinatriumperoxidisulfat oder Diammoniumperoxidisulfat eingesetzt. Selbstverständlich ist es auch möglich, Gemische vorgenannter wasserlöslicher Radikalinitiatoren einzusetzen.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxi)-2,5-dimethyl-3-hexen, 1,1-Bis(tert.-butylperoxi)-3,3,5-trimethylcyclohexan, 1,1-Bis(tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Dicetylperoxidicarbonat, Dimyristylperoxidicarbonat, tert.-Butylperoxiisopropylcarbonat oder tert.-Butylperoxi-2-ethylhexylcarbonat.

Bevorzugt wird als öllöslicher Radikalinitiator eine Verbindung ausgewählt aus der Gruppe umfassend tert.-Butylperoxi-2-ethylhexanoat (Trigonox^{®} 21), tert.-Amylperoxi-2-ethylhexanoat, tert.-Butylperoxibenzoat (Trigonox^{®} C), tert.-Amylperoxibenzoat, tert.-Butylperoxiacetat, tert.-Butylperoxi-3,5,5-trimethylhexanoat (Trigonox^{®} 42 S), tert.-Butylperoxiisobutanoat, tert.-Butylperoxidiethylacetat, tert.-Butylperoxipivalat, tert.-Butylperoxiisopropylcarbonat, (Trigonox^{®} BPIC) und tert.-Butylperoxi-2-ethylhexylcarbonat (Trigonox^{®} 117) eingesetzt. Selbstverständlich ist es auch möglich, Gemische vorgenannter öllöslicher Radikalinitiatoren einzusetzten.

Insbesondere bevorzugt werden wasserlösliche Radikalinitiatoren eingesetzt.

Die Gesamtmenge an eingesetztem Radikalinitiator beträgt 0,01 bis 5 Gew.-%, häufig 0,5 bis 3 Gew.-% und oft 1 bis 2 Gew.-%, jeweils bezogen auf die Gesamtmenge an Monomer E.

Vorteilhaft werden im erfindungsgemäßen Verfahren Miniemulsionen eingesetzt. Die allgemeine Herstellung von wässrigen Miniemulsionen aus wässrigen Makroemulsionen oder Mischungen ist dem Fachmann bekannt (vgl. J. Appl. Polym. Sci. 43 (1991) 1059).

Die mittlere Größe der Tröpfchen der dispersen Phase der erfindungsgemäß vorteilhaft zu verwendenden wässrigen Miniemulsion lässt sich nach dem Prinzip der quasielastischen dynamischen Lichtstreuung bestimmen (der sogenannte z-mittlere Tröpfchendurchmesser d_{z} der unimodalen Analyse der Autokorrelationsfunktion), beispielsweise mittels eines Coulter N4 Plus Particle Analysers der Coulter Scientific Instruments. Die Messungen werden an verdünnten wässrigen Miniemulsionen vorgenommen, deren Gehalt an dispersen Bestandteilen ca. 0,01 bis 1 Gew.-% beträgt.

Erfindungsgemäß sind die solchermaßen für die sogenannten Miniemulsionen ermittelten Werte für d_{z} normalerweise kleiner 700 nm, häufig kleiner 500 nm. Günstig ist erfindungsgemäß der d_{z}-Bereich von 100 nm bis 400 nm bzw. von 100 nm bis 300 nm. Im Normalfall beträgt die d_{z} der erfindungsgemäß einzusetzenden wässrigen Miniemulsion größer 40 nm.

Zu diesem Zweck können beispielsweise Hochdruckhomogenisatoren angewendet werden. Die Feinverteilung der Komponenten wird in diesen Maschinen durch einen hohen lokalen Energieeintrag erzielt. Zwei Varianten haben sich diesbezüglich besonders bewährt.

Bei der ersten Variante wird die wässrige Makroemulsion über eine Kolbenpumpe auf ca. 200 bar verdichtet und anschließend durch einen engen Spalt entspannt. Die Wirkung beruht hier auf einem Zusammenspiel von hohen Scher- und Druckgradienten und Kavitation im Spalt. Ein Beispiel für einen Hochdruckhomogenisator, der nach diesem Prinzip funktioniert, ist der Niro-Soavi Hochdruckhomogenisator Typ NS1001 L Panda.

Bei der zweiten Variante wird die verdichtete wässrige Makroemulsion über zwei gegeneinander gerichtete Düsen in eine Mischkammer entspannt. Die Feinverteilungswirkung ist hier vor allem von den hydrodynamischen Verhältnissen in der Mischkammer abhängig. Ein Beispiel für diesen Homogenisatortyp ist der Microfluidizer Typ M 120 E der Microfluidics Corp. In diesem Hochdruckhomogenisator wird die wässrige Makroemulsion mittels einer pneumatisch betriebenen Kolbenpumpe auf Drücke von bis zu 1200 bar komprimiert und über eine sogenannte "interaction chamber" entspannt. In der "interaction chamber" wird der Emulsionsstrahl in einem Mikrokanalsystem in zwei Strahlen aufgeteilt, die unter einem Winkel von 180° aufeinandergeführt werden. Ein weiteres Beispiel für einen nach dieser Homogenisierungsart arbeitenden Homogenisator ist der Nanojet Typ Expo der Nanojet Engineering GmbH. Allerdings sind beim Nanojet anstatt eines festen Kanalsystems zwei Homogenisierventile eingebaut, die mechanisch verstellt werden können.

Neben den zuvor erläuterten Prinzipien kann die Homogenisierung aber z. B. auch durch Anwendung von Ultraschall (z. B. Branson Sonifier II 450) erfolgen. Die Feinverteilung beruht hier auf Kavitationsmechanismen. Für die Homogenisierung mittels Ultraschall sind grundsätzlich auch die in der GB 22 50 930 und der US 5,108,654 beschriebenen Vorrichtungen geeignet. Die Qualität der im Schallfeld erzeugten wässrigen Miniemulsion hängt dabei nicht nur von der eingebrachten Schallleistung, sondern auch noch von anderen Faktoren, wie z. B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, der Grenzflächenspannung und dem Dampfdruck ab. Die resultierende Tröpfchengröße hängt dabei u.a. von der Konzentration des Dispergiermittels sowie von der bei der Homogenisierung eingetragenen Energie ab und ist daher z.B. durch entsprechende Veränderung des Homogenisierungsdrucks bzw. der entsprechenden Ultraschallenergie gezielt einstellbar.

Erfindungsgemäß können optional zusätzlich auch hydrophobe organische Verbindungen, d.h. sehr gering in Wasser lösliche organische Lösemittel und/oder ethylenisch ungesättigte Monomere eingesetzt werden.

Geeignete organische Lösemittel sind flüssige aliphatische und aromatische Kohlenwasserstoffe mit 5 bis 30 C-Atomen, wie beispielsweise n-Pentan und Isomere, Cyclo-pentan, n-Hexan und Isomere, Cyclohexan, n-Heptan und Isomere, n-Octan und Isomere, n-Nonan und Isomere, n-Decan und Isomere, n-Dodecan und Isomere, n-Tetradecan und Isomere, n-Hexadecan und Isomere, n-Octadecan und Isomere, Benzol, Toluol, Ethylbenzol, Cumol, o-, m- oder p-Xylol, Mesitylen, sowie allgemein Kohlenwasserstoffgemische im Siedebereich von 30 bis 250°C. Ebenfalls einsetzbar sind Hydroxyverbindungen, wie gesättigte und ungesättigte Fettalkohole mit 10 bis 28 C-Atomen, beispielsweise n-Dodecanol, n-Tetradecanol, n-Hexadecanol und deren Isomeren oder Cetylalkohol, Ester, wie beispielsweise Fettsäureester mit 10 bis 28 C-Atomen im Säureteil und 1 bis 10 C-Atomen im Alkoholteil oder Ester aus Carbonsäuren und Fettalkoholen mit 1 bis 10 C-Atomen im Carbonsäureteil und 10 bis 28 C-Atomen im Alkoholteil. Selbstverständlich ist es auch möglich, Gemische vorgenannter Lösemittel einzusetzen.

Die Lösemittelgesamtmenge beträgt bis zu 60 Gew.-%, bevorzugt 0,1 bis 40 Gew.-% und insbesondere bevorzugt 0,5 bis 10 Gew.-%, jeweils bezogen auf die Gesamtmenge an Wasser.

Unter sehr gering in Wasser löslich soll im Rahmen dieser Schrift verstanden werden, wenn das Lösemittel oder das ethylenisch ungesättigte Monomer in entionisiertem Wasser bei 20 C und 1 bar (absolut) eine Löslichkeit vorzugsweise weniger als 1 g/l, besonders bevorzugt weniger als 0,1 g/l, ganz besonders bevorzugt weniger als 0,01 g/l, aufweist.

Vorteilhaft werden im erfindungsgemäßen Verfahren auch Mikroemulsionen eingesetzt. Die allgemeine Herstellung von wässrigen Mikroemulsionen aus wässrigen Makroemulsionen oder Mischungen ist dem Fachmann bekannt (vgl. Macromol. Chem. Phys. 196 (1995) 441 und Colloids Surf. A: Physicochem. Eng. Asp. 153 (1999) 47).

Die in einer Mikroemulsion dispergierten Tropfen weisen einen sehr geringen Durchmesser auf, beispielsweise unter 50 nm, so dass die Mikroemulsion mit dem bloßen Auge als klare Lösung erscheint. Eine Mikroemulsion kann durch Zusatz einer ausreichenden Menge eines Emulgators erzeugt werden. Derartig hergestellte Mikroemulsionen sind thermodynamisch stabil und entstehen spontan.
Die wässrige Monomeremulsion wird unter Ausbildung diskreter Tropfen in die Gasphase dosiert.

Im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Als Sprühdüsen können Vollkegeldüsen, Zweistoff- oder Dreistoffdüsen eingesetzt werden. Der Durchsatz je Sprühdüse beträgt zweckmäßig 0,1 bis 10 m³/h, häufig 0,5 bis 5 m³/h.

Die Reaktion kann auch in Apparaten durchgeführt werden in denen die Monomerlösung in Form monodisperser Tropfen frei fallen kann. Geeignet dazu sind Apparaturen, wie sie beispielsweise in US 5,269,980 beschrieben sind.

Eine Tropfenerzeugung durch laminaren Strahlzerfall, wie in Rev. Sci. Instr. 38 (1966) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten diskreten Tropfen weisen einen mittleren Durchmesser von vorzugsweise 10 bis 1.000 µm, besonders bevorzugt von 10 bis 500 µm, ganz besonders bevorzugt von 100 bis 200 µm, auf, wobei der Tropfendurchmesser durch Lichtstreuung bestimmt werden kann und den volumengemittelten mittleren Durchmesser bedeutet.

Der Polymerisationsreaktor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50 %, besonders bevorzugt zu mindestens 75 %, als Kreisgas in den Reaktionsraum zurückgeführt. Üblicherweise wird eine Teilmenge des Trägergases nach jedem Durchgang ausgeschleust, vorzugsweise bis zu 10 %, besonders bevorzugt bis zu 3 %, ganz besonders bevorzugt bis zu 1 %.

Der Sauerstoffgehalt des Trägergases beträgt vorzugsweise von 0,5 bis 21 Vol.-%, besonders bevorzugt von 1 bis 10 Vol.-%, ganz besonders bevorzugt von 2 bis 7 Gew.-%.

Das Trägergas enthält neben Sauerstoff vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 95 Vol.-%.

Die Gasgeschwindigkeit wird vorzugsweise so eingestellt, dass die Strömung im Polymerisationsreaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird vor dem Reaktor auf die Reaktionstemperatur vorgewärmt.

Die Gaseingangstemperatur, d.h. die Temperatur mit der das Gas in den Reaktionsraum eintritt, beträgt von 110 bis 200°C, besonders bevorzugt von 140 bis 180°C, ganz besonders bevorzugt von 150 bis 170°C.

Die Gaseintrittstemperatur wird so geregelt, dass die Gasaustrittstemperatur, d.h. die Temperatur mit der das Gas den Reaktionsraum verlässt von 60 bis 120°C, besonders bevorzugt von 80 bis 100°C, ganz besonders bevorzugt von 70 bis 90°C, beträgt.
Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer. Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleit beheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

### Beispiele

### Beispiel 1:

0,177 kg Stearylacrylat, 2,134 kg n-Butylacrylat, 1,956 kg t-Butylmethacrylat werden gemischt und in einer wässrigen Phase bestehend aus 4,446 kg Wasser, 0,356 kg einer 50 %igen wässrigen Lösung Acrylamid, 0,208 kg einer 32 %igen wässrigen Lösung gemischter C₁₂/C₁₄-Alkylpolyglykolethersulfat-Natriumsalze und 0,223 kg einer wässrigen 20 %igen Lösung eines Gemisches linearer C₁₆/C₁₈-Fettalkoholethoxylate, durch Rühren dispergiert. Die Voremulsion wird durch eine Pumpe mit einer Förderrate von 9,5 kg/h auf einen Druck von 200 bar gefördert und durch eine Homogenisierdüse auf Umgebungsdruck entspannt. Anschließend werden mit einer Förderrate von 1,659 kg/h, 1,659 kg einer wässrigen Lösung, welche 0,045 kg Azoinitiator (2,2'-Azobis(2-(-imidazolin-2-yl)propan)dihydrochlorid, Handelsname Wako VA-044) enthält, zudosiert und die Mischung in einen Rohrreaktor von 86 m Länge überführt, in welchem bei einer Polymerisationstemperatur von 70 °C anpolymerisiert wird. Nach dem Vorreaktor werden mit einer Förderrate von 0,961 kg/h, 0,961 kg einer 30 %igen wässrigen Lösung eines Schutzkolloids, welches zur Klasse der sulfonierten Phenolharze gehört, zudosiert und in einen beheizten, mit Stickstoff inertisierten Sprühturm (Höhe 12 m, Durchmesser 2 m. Gasgeschwindigkeit 0,1 m/s im Gleichstrom von oben nach unten) mittels Dreistoffdüse versprüht. Das erhaltene Pulver besitzt eine Restfeuchte von 1 % und eine durchschnittliche Partikelgröße von 100 µm. Das Pulver ist nach Zugabe in Wasser redispergierbar.

### Beispiel 2:

0,177 kg Stearylacrylat, 2,134 kg n-Butylacrylat, 1,956 kg t-Butylmethacrylat werden gemischt und in einer wässrigen Phase bestehend aus 4,446 kg Wasser, 0,356 kg einer 50 %igen wässrigen Lösung Acrylamid, 0,208 kg einer 32 %igen wässrigen Lösung gemischter C₁₂/C₁₄-Alkylpolyglykolethersulfat-Natriumsalze und 0,223 kg einer wässrigen 20 %igen Lösung eines Gemisches linearer C₁₆/C₁₈-Fettalkoholethoxylate, durch Rühren dispergiert. Die Voremulsion wird durch eine Pumpe mit einer Förderrate von 9,5 kg/h auf einen Druck von 200 bar gefördert und durch eine Homogenisierdüse auf Umgebungsdruck entspannt. Anschließend werden mit einer Förderrate von 1,659 kg/h, 1,659 kg einer wässrigen Lösung, welche 0,045 kg Natriumperoxodisulfat enthält, zudosiert und die Mischung in einen Rohrreaktor von 86 m Länge überführt, in welchem bei einer Polymerisationstemperatur von 90 °C anpolymerisiert wird. Nach dem Vorreaktor werden mit einer Förderrate von 0,961 kg/h, 0,961 kg einer 30 %igen wässrigen Lösung eines Schutzkolloids, welches zur Klasse der sulfonierten Phenolharze gehört, zudosiert und in einen beheizten, mit Stickstoff inertisierten Sprühturm (Höhe 12 m, Durchmesser 2 m. Gasgeschwindigkeit 0,1 m/s im Gleichstrom von oben nach unten) mittels Dreistoffdüse versprüht. Das erhaltene Pulver besitzt eine Restfeuchte von 1 % und eine durchschnittliche Partikelgröße von 100 µm. Das Pulver ist nach Zugabe in Wasser redispergierbar.

## Patentansprüche

1. Verfahren zur Herstellung von Polymerpartikeln durch Polymerisation einer Emulsion, enthaltend mindestens ein ethylenisch ungesättigtes Monomer, mindestens ein Dispergierhilfsmittel, mindestens einen Polymerisationsinitiator und Wasser, wobei das ethylenisch ungesättigte Monomer in Wasser dispergiert ist, **dadurch gekennzeichnet, dass** die Emulsion erst bei einem Umsatz an ethylenisch ungesättigten Monomeren von 1 bis 98% unter Ausbildung diskreter Tropfen in einen Reaktionsraum dosiert wird und wobei
- der Polymerisationsreaktor von einem Gas durchströmt wird,
- das Gas vor dem Reaktor auf Reaktionstemperatur vorgewärmt wird,
- die Gaseingangstemperatur in den Reaktionsraum 110 - 200 °C beträgt,
- die Gasaustrittstemperatur 60 bis 120 °C beträgt und **dadurch gekennzeichnet, dass** das Polymerisationsverfahren 2-stufig durchgeführt wird.

2. Verfahren gemäß Anspruch 1, **dadurch gekennzeichnet, dass** das ethylenisch ungesättigte Monomer ausgewählt ist aus der Gruppe Styrol, Acrylnitril, Butadien, Ethylen, Vinylchlorid, Vinylidenchlorid, Vinylester, Vinylether, Acrylsäureester und Methacrylsäureester.

3. Verfahren gemäß einem der Ansprüche 1 oder 2, **dadurch gekennzeichnet, dass** die Emulsion, bezogen auf die Gesamtmenge an ethylenisch ungesättigtem Monomer, mindestens 0,01 Gew.-% des Dispergierhilfsmittels enthält.

4. Verfahren gemäß einem der Ansprüche 1 bis 3, **dadurch gekennzeichnet, dass** das Dispergierhilfsmittel ein Emulgator ist.

5. Verfahren gemäß einem der Ansprüche 1 bis 4, **dadurch gekennzeichnet, dass** der Polymerisationsinitiator ein radikalischer Polymerisationsinitiator ist.

6. Verfahren gemäß einem der Ansprüche 1 bis 5, **dadurch gekennzeichnet, dass** die diskreten Tropfen der Emulsion einen mittleren Durchmesser von 1 bis 1.000 µm aufweisen.

7. Verfahren gemäß einem der Ansprüche 1 bis 6, **dadurch gekennzeichnet, dass** die Emulsion, bezogen auf die Gesamtmenge an ethylenisch ungesättigtem Monomer, mindestens 0,1 bis 15 Gew.-% mindestens eines Schutzkolloids enthält.

8. Verfahren gemäß Anspruch 7, **dadurch gekennzeichnet, dass** das Schutzkolloid ausgewählt ist aus der Gruppe der Formaldehydkondensationsprodukte mit einkernigen und mehrkernigen, substituierten und unsubstituierten, sulfonierten aromatischen Verbindungen, Polyvinylalkohole, Polyvinylpyrrolidone, Polyvinylamine, Polyvinylformamide und Polyalkylenoxide.

9. Verfahren gemäß einem der Ansprüche 1 bis 8, **dadurch gekennzeichnet, dass** die Emulsion eine Miniemulsion ist.

10. Verfahren gemäß Anspruch 9 **dadurch gekennzeichnet, dass** die Miniemulsion, bezogen auf die Gesamtmenge an ethylenisch ungesättigtem Monomer, mindestens 0,01 Gew.-% einer hydrophoben organischen Verbindung enthält.

11. Verfahren gemäß Anspruch 10, **dadurch gekennzeichnet, dass** die hydrophobe organische Verbindung ausgewählt ist aus der Gruppe aliphatischer Kohlenwasserstoffe, Fettalkohole, Fettalkoholacrylate und Fettalkoholmethacrylate.

12. Verfahren gemäß einem der Ansprüche 1 bis 11, **dadurch gekennzeichnet, dass** die Emulsion eine Mikroemulsion ist.

13. Verfahren gemäß Anspruch 12, **dadurch gekennzeichnet, dass** die Mikroemulsion mindestens 1 Gew.-% mindestens eines Emulgators enthält.

14. Verfahren gemäß Anspruch 13, **dadurch gekennzeichnet, dass** der Emulgator ausgewählt ist aus der Gruppe der kationischen, anionischen und nichtionischen Tenside.

## Claims

1. A process for producing polymer particles by polymerizing an emulsion comprising at least one ethylenically unsaturated monomer, at least one dispersing assistant, at least one polymerization initiator and water, the ethylenically unsaturated monomer being dispersed in water, wherein the emulsion is metered into a reaction chamber to form discrete droplets only at a conversion of ethylenically unsaturated monomer of from 1 to 98% and
- a gas flows through the polymerization reactor,
- the gas is preheated to reaction temperature upstream of the reactor,
- the gas inlet temperature into the reaction chamber is 110-200°C,
- the gas outlet temperature is 60 to 120°C, and wherein
- the polymerization process is performed in 2 stages.

2. The process according to claim 1, wherein the ethylenically unsaturated monomer is selected from the group of styrene, acrylonitrile, butadiene, ethylene, vinyl chloride, vinylidene chloride, vinyl esters, vinyl ethers, acrylic esters and methacrylic esters.

3. The process according to either of claims 1 and 2, wherein the emulsion, based on the total amount of ethylenically unsaturated monomer, comprises at least 0.01% by weight of the dispersing assistant.

4. The process according to any one of claims 1 to 3, wherein the dispersing assistant is an emulsifier.

5. The process according to any one of claims 1 to 4, wherein the polymerization initiator is a free-radical polymerization initiator.

6. The process according to any one of claims 1 to 5, wherein the discrete droplets of the emulsion have a mean diameter of from 1 to 1000 µm.

7. The process according to any one of claims 1 to 6, wherein the emulsion, based on the total amount of ethylenically unsaturated monomer, comprises from at least 0.1 to 15% by weight of at least one protective colloid.

8. The process according to claim 7, wherein the protective colloid is selected from the group of the formaldehyde condensation products with monocyclic and polycyclic, substituted and unsubstituted, sulfonated aromatic compounds, polyvinyl alcohols, polyvinylpyrrolidones, polyvinylamines, polyvinylformamides and polyalkylene oxides.

9. The process according to any one of claims 1 to 8, wherein the emulsion is a miniemulsion.

10. The process according to claim 9, wherein the miniemulsion, based on the total amount of ethylenically unsaturated monomer, comprises at least 0.01% by weight of a hydrophobic organic compound.

11. The process according to claim 10, wherein the hydrophobic organic compound is selected from the group of aliphatic hydrocarbons, fatty alcohols, fatty alcohol acrylates and fatty alcohol methacrylates.

12. The process according to any one of claims 1 to 11, wherein the emulsion is a microemulsion.

13. The process according to claim 12, wherein the microemulsion comprises at least 1% by weight of at least one emulsifier.

14. The process according to claim 13, wherein the emulsifier is selected from the group of the cationic, anionic and nonionic surfactants.

## Revendications

1. Procédé pour la production de particules de polymère par polymérisation d'une émulsion, contenant au moins un monomère à insaturation éthylénique, au moins un adjuvant de dispersion, au moins un amorceur de polymérisation et de l'eau, le monomère à insaturation éthylénique étant dispersé dans de l'eau, **caractérisé en ce que** dans un espace de réaction on n'ajoute par addition dosée l'émulsion qu'à un taux de conversion des monomères à insaturation éthylénique de 1 à 98 % avec formation de gouttes individualisées et dans lequel
- le réacteur de polymérisation est traversé par un gaz,
- le gaz avant le réacteur est préchauffé jusqu'à la température de réaction,
- la température du gaz à l'entrée dans l'espace de réaction vaut 110 - 200 °C,
- la température du gaz à la sortie vaut de 60 à 120 °C
et **caractérisé en ce que** le procédé de polymérisation est effectué en 2 étapes.

2. Procédé selon la revendication 1, **caractérisé en ce que** le monomère à insaturation éthylénique est choisi dans le groupe constitué par le styrène, l'acrylonitrile, le butadiène, l'éthylène, le chlorure de vinyle, le chlorure de vinylidène, des esters vinyliques, des éthers vinyliques, des esters d'acide acrylique et des esters d'acide méthacrylique.

3. Procédé selon la revendication 1 ou 2, **caractérisé en ce que** l'émulsion contient au moins 0,01 % en poids de l'adjuvant de dispersion par rapport à la quantité totale de monomère à insaturation éthylénique.

4. Procédé selon l'une quelconque des revendications 1 à 3, **caractérisé en ce que** l'adjuvant de dispersion est un émulsifiant.

5. Procédé selon l'une quelconque des revendications 1 à 4, **caractérisé en ce que** l'amorceur de polymérisation est un amorceur de polymérisation radicalaire.

6. Procédé selon l'une quelconque des revendications 1 à 5, **caractérisé en ce que** les gouttes individualisées de l'émulsion présentent un diamètre moyen de 1 à 1 000 µm.

7. Procédé selon l'une quelconque des revendications 1 à 6, **caractérisé en ce que** l'émulsion contient au moins 0,1 à 15 % en poids d'au moins un colloïde protecteur, par rapport à la quantité totale de monomère à insaturation éthylénique.

8. Procédé selon la revendication 7, **caractérisé en ce que** le colloïde protecteur est choisi dans le groupe des produits de condensation de formaldéhyde avec des composés aromatiques sulfonés mononucléaires ou polynucléaires, substitués ou non substitués, des poly(alcool vinylique)s, polyvinylpyrrolidones, polyvinylamines, polyvinylformamides et polyoxyalkylènes.

9. Procédé selon l'une quelconque des revendications 1 à 8, **caractérisé en ce que** l'émulsion est une miniémulsion.

10. Procédé selon la revendication 9, **caractérisé en ce que** la miniémulsion contient au moins 0,01 % en poids d'un composé organique hydrophobe, par rapport à la quantité totale de monomère à insaturation éthylénique.

11. Procédé selon la revendication 10, **caractérisé en ce que** le composé organique hydrophobe est choisi dans le groupe constitué par des hydrocarbures aliphatiques, des alcools gras, des acrylates d'alcools gras et des méthacrylates d'alcools gras.

12. Procédé selon l'une quelconque des revendications 1 à 11, **caractérisé en ce que** l'émulsion est une microémulsion.

13. Procédé selon la revendication 12, **caractérisé en ce que** la microémulsion contient au moins 1 % en poids d'au moins un émulsifiant.

14. Procédé selon la revendication 13, **caractérisé en ce que** l'émulsifiant est choisi dans le groupe des tensioactifs cationiques, anioniques et non ioniques.
